# EUROPEAN PATENT APPLICATION

(11) **EP 2 842 466 A2**
(43) Date of publication of application: **04.03.2015**
(21) Application number: 13730954.8
(22) Date of filing: 24.04.2013
(51) Int. Cl.: A47J 31/44, A47J 31/46

(54) **BEVERAGE PREPARATION MACHINE WITH DIFFERENT WATER SUPPLY MEANS AND METHOD FOR OPERATING SAID MACHINE**

(30) Priority: 26.04.2012 PT 2012106269
(71) Applicant: Novadelta-Comércio e Industria de Cafés, S.A., 1950-406 Lisboa (PT)
(72) Inventor: NABEIRO, Rui Miguel, P-7370-112 Campo Maior (PT)
(74) Representative: Miranda de Sousa, João Paulo Vaz
(86) International application number: PCT/PT2013/000023
(87) International publication number: WO 2013/162393

(57) **Abstract**

The present utility model refers to a machine (1) for preparation of beverages, in particular preparation of aromatic beverages by means of infusion, such as for example espresso coffee or tea, with inclusion of means allowing the optional use of different water supply means, including the possibility of use of a fluid recipient (2) presenting a standard bottleneck zone (3), such as for example a bottle of standard dimensions, or alternatively, of a fluid reservoir (4) specific of the machine for preparation of beverages and presenting a respective lid element (5), in conditions of easy use and efficient flow of the fluid out of said fluid supply means (2, 4).

The present utility model further reveals a process for operation of a machine (i) with optional use of a fluid recipient (2) presenting a standard bottleneck zone (3) or, alternatively, of a fluid reservoir (4) presenting a lid element (5).

## Description

### Field of the utility model

The present utility model refers to the field of machines for preparation of beverages presenting at least one water reservoir, in general, and to machines for preparation of aromatic beverages by infusion, such as for example espresso coffee or tea, and allowing the optional use of a standard water recipient, in particular.

The present utility model further refers to a process for operation of said machine for preparation of beverages.

### Background of the utility model

The possibility of using a bottle of water of standard type as water supply source of a machine for preparation of beverages presents several advantages to the user both in terms of quality of water, as in terms of the use in locations without access to potable water distribution grids. In this respect, there are known in the prior art several solutions for the possibility of using a water reservoir specific of the machine or, alternatively, a bottle of water of standard type.

The document CH 700109 B1 discloses an adapter for engagement with a bottle of standard type that is configured with mechanical engagement means, notably screwing thread, and means of spring valve type. However, said adapter does not represent a technical solution in view of two important aspects: the continuous and regular flow of water through the adapter and out of the bottle, and the general stability of some more common embodiments of a standard recipient when disposed on such adapter. In fact, it is necessary to produce an opening on the bottle for the passage of air, so as to allow a continuous and regular discharge flow through said bottleneck zone. This solution requires that such an opening is previously anticipated on the factory-side of the standard type recipient, or that a user provides it. In both cases, it constitutes a substantial constrain to the use of the machine. As alternative solution, the document CH 700108 B1 further points to the use of an air valve on said adapter, but the use of such a valve increases the complexity and costs of the solution and also does not ensure a continuous and regular flow out of said bottle of standard type. Moreover, said adapter does not ensure general stability of such a standard reservoir when engaged in the adapter, specially when it is the case of bottles of water of bigger dimensions, such as for example of 1,5 litre capacity.

Documents EP 1369070 A2 and EP 1055386 A1 disclose adapters for engagement of a standard water bottle on a coffee preparation machine but also do not disclose a solution ensuring good flow conditions of the fluid out of the bottle.

Moreover, the prior art documents also do not disclose a solution of easy use.

### General description of the utility model

The goal of the present utility model is to provided a machine for preparation of beverages, notably of aromatic beverages by means of infusion, such as for example espresso coffee and tea, and presenting at least one connection support for engagement of different fluid supply means, notably water, for supply of a respective fluid circuit, in particular so as to allow the optional use of a fluid reservoir specific of said machine or, alternatively, of a fluid recipient presenting a standard bottleneck zone, in particular a bottle or similar recipient, in conditions of easy of use and of efficient flow of fluid out of said fluid supply means.

A related goal of the present utility model is to provide means of engagement of fluid recipients with a standard bottleneck zone, preferentially flow connection means of the valve type, that allow a substantially regular and continuous discharge flow, as well as a general stability of said fluid recipients when engaged in a machine for preparation of beverages, including in a vertical position and only through respective standard bottleneck zone.

A related goal of the present utility model is to provide engagement means of a lid element of a reservoir specific of the machine for preparation of beverages allowing the regular and continuous flow of fluid out thereof and avoid the occurrence of condensation inside of said reservoir.

The aforementioned goals are solved by a set of inventive aspects relating to the particular disposition and configuration of elements of elastic seal type, in each case in the engagement disposition of the standard bottleneck zone of the fluid recipient, and of the edge zone of the lid element in the fluid reservoir specific of the machine.

A related goal is to propose a process for operation of a machine for preparation of beverages according to the present utility model.

### Brief description of the drawings

The utility model shall hereinafter be explained in more detail with reference to preferred embodiments and in the attached Figures.

The Figures show:
- Figures 1a - 1b:: schematic representations in side view of a machine (1) for preparation of beverages according to the utility model, with a fluid recipient (2) of bottle type with a standard bottleneck zone and with a fluid reservoir (4) specific of the machine, respectively;
- Figures 2a - 2b:: side views, including cut view and detail view 01 thereof, respectively, of the engagement of a fluid recipient (2) of bottle type with a standard bottleneck zone, in a machine (1) according to the utility model;
- Figures 3a - 3b:: side views in cut of a lid element (5), and side views in cut of a seal element (10), respectively, of a fluid reservoir (4) specific of the machine (1) according to the utility model;
- Figures 4a - 4b:: inferior plant and side cut views, respectively, of the disposition of flow connection means (6) in a lid element (5) of a fluid reservoir (4) specific of the machine (1) according to the utility model.

### Detailed description of the utility model

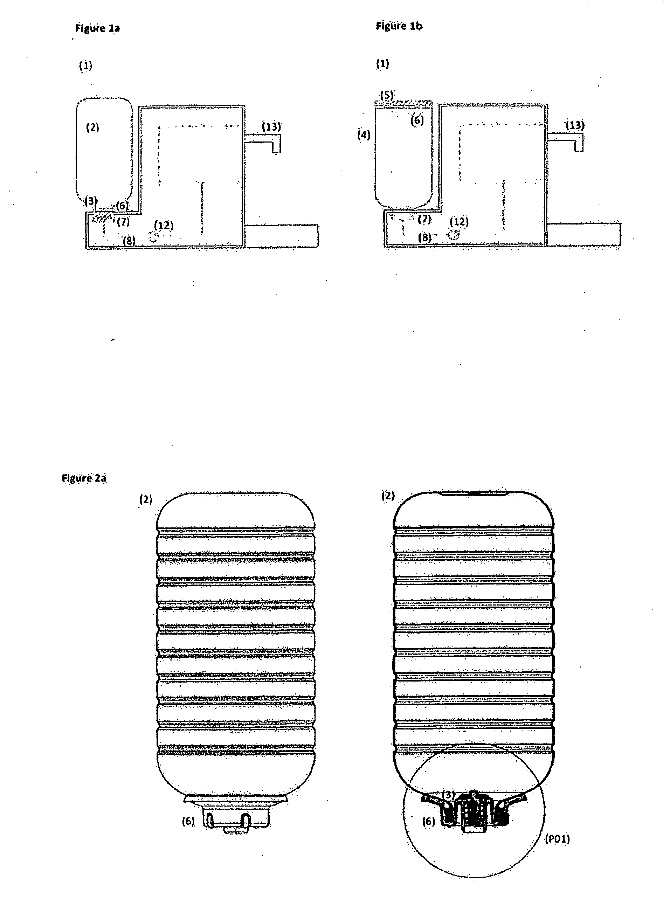

Figures 1a and 1b show in each case schematic representations in side view of a machine (1) for preparation of aromatic beverages by means of infusion, such as for example a coffee machine of the espresso type, tea or similar, and including in each case a fluid, for example water, supply means, disposed upstream, under engagement with a connection support (7) and in fluid connection with a fluid distribution circuit (8) where there is provided at least one fluid circulation device (12), such as for example a conventional water circulation pump, and at least one beverage discharge (13).

In the Case of Figure 1a, machine (1) is provided with a fluid recipient (2) presenting a standard bottleneck zone (3). In particular, according to a preferred embodiment of the utility model, it may be the case of a PET plastic material water bottle with the dimensions usually available in the market, or a similar recipient. The fluid recipient (2) is disposed in the machine (1) with said standard bottleneck zone (3) (known in prior art and therefore here only indicated, not represented in detail) oriented downwards and in engagement with the machine (1) by means of flow connection means (6), preferentially of the valve type for example as known in prior art, and of a connection support (7) so that it is provided a flow passageway into said fluid distribution circuit (8).

In the case of Figure 1b, the same machine (1) presents a fluid reservoir (4) specific of said machine (1), as usually configured specifically to a respective machine for preparation of beverages, and that includes a lid element (5) disposed in the feeding overture of said fluid reservoir (4) and a respective fluid exit in fluid connection with the fluid distribution circuit (8) through the same connection support (7). Moreover, according to a preferred embodiment, the flow connection means (6) are disposed in engagement in one side of the lid element (5) of the fluid reservoir (4), thereby providing a solution for their storage when not in use.

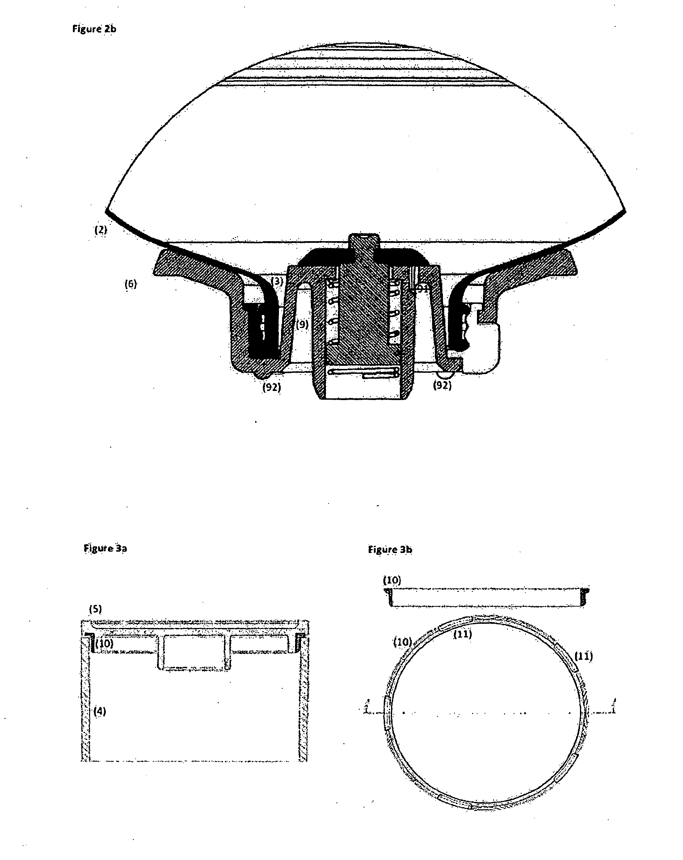

Figures 2a and 2b show in two side and side cut views (Figure 2a), as well as respective detail (P01) in cut (Figure 2b), respectively, the engagement of the flow connection means (6) with the bottleneck zone (3) of a fluid recipient (2), for example of the type standard water bottle, or similar. Said flow connection means (6) are provided in annular form and engage, preferentially by means of pressure fit into respective cavity zone, in the top of the bottleneck zone (3) of the fluid recipient (2).

As it can be seen in detail P01 represented in Figure 2b, the flow connection means (6) include a seal element (9) as well as, as known in prior art, movable means and respective elastic force means of the spring type, actuated according to the pressure generated on the side of the fluid distribution circuit (8). Moreover, the seal element (9) is disposed so as to be in pressure fit around the standard bottleneck zone (3).

According to a first inventive aspect of the present utility model, the seal element (9) is configured so as to ensure a leak-free connection with the standard bottleneck zone (3) and to present in each case at least one, preferentially a plurality of air passageways (91). These air passageways (91) ensure a coherent air passageway so as to compensate the pressure variations inside the recipient and this way provide an efficient flow of the fluid out of the recipient, without interruption notably due to the formation of air bubble inside of the recipient. According to a preferred embodiment, the air passageways (91) present a reduced critical dimension relative to the bottleneck zone (3), preferentially a diameter inferior to 2 mm, more preferentially inferior to 1 mm.

According to another inventive aspect, the seal element (9) further presents distancing elements (92) in an inferior zone, preferentially disposed distributed along its perimeter, so that when disposed in said connection support (7) ensure said coherent air passageway between the exterior and interior of the water recipient (2).

According to another inventive aspect, the seal (9) element is configured so that its interior surface oriented towards the bottleneck zone (3), prolongs itself along part, preferentially most part of the extension of said bottleneck zone (3) as well as of the top zone of said bottleneck zone (3). According to another inventive aspect, said interior surface of the seal element (9) is configured with several variations of cross section. According to this preferred embodiment, this surface of the seal element (9) is provided in waved, dented or similar form.

According to another preferred embodiment, the seal element (9) is produced based upon a synthetic material of the rubber type, or in a material of similar density and porosity.

Figures 3a and 3b show in side view, and in inferior plant and respective side cut view (identified as cut FF), respectively, the lid element (5) that is disposed in a fluid reservoir (4) specific of the machine (1) as represented in Figure 1b.

According to a preferred embodiment, said lid element (5) is provided with a seal element (10) for better mechanic engagement with the edge of the respective fitting opening of the fluid reservoir (4). This seal element (10) is itself provided with at least one, preferentially a plurality of narrower sections (11) of cross section, so that a section of air passage is provided through the lid element (5) when placed upon the fluid reservoir (4). A substantially liquid tight, but substantially gas permeable engagement of the lid element (5) is thus provided. This condition is advantageous because it avoids the occurrence of condensations inside the fluid reservoir (4) without reducing the fixation of the lid element 85) on the top of the fluid reservoir (4).

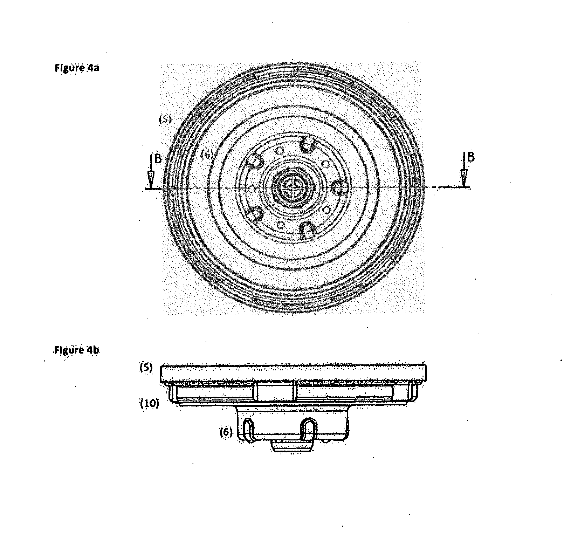

Figures 4a and 4b are plant and side views, respectively, of a lid element (5) with flow connection means (6) temporarily not being used for the optional use of a fluid recipient (2) in a machine (1) according to the utility model. According to another preferred embodiment, the flow connection means (6) are disposed on the lid element (5) by means of form fitting on this, preferentially carried out by means of a positive fitting, preferentially on the side of the lid element (5) that is oriented towards the interior of the fluid reservoir (4) of a machine (1) according to the utility model.

The proposed disposition allows for a great flexibility and easy of sue of the system (1) according to the utility model, notably with the option of using the fluid reservoir (4) specific to the machine, or of the standard fluid recipient (2), such as for example water bottle of standard dimensions. According to an operation process according to the utility model, it suffices for a user to remove the flow connection means (6) from its initial fitting in the lid element (5) of the respective fluid reservoir and placement by pressure fit in the bottleneck zone (3) of a standard fluid recipient (2), the latter thereafter engaging, preferentially by means of simple pressure fitting, in a respective same support in the machine (1) for both types of fluid supply means (2, 4).

## Claims

1. Machine (1) for preparation of beverages provided so as to use a fluid recipient (2) presenting a standard bottleneck zone (3), including of the PET water bottle type or similar, or a fluid reservoir (4) presenting a lid element (5), disposed with a respective fluid exit in engagement, optionally by means of removable flow connection means (6) preferentially of the valve type, in a respective connection support (7), so as to provide the passage of said fluid, for example water, to a fluid distribution circuit (8),
**characterized**
**in that** the flow connection means (6) of the fluid recipient (2) are provided so that they may be disposed, preferentially by a press to fit connection, in removable manner in said connection support (7) and in the lid element (5), and in that said flow connection means (6) are configured so as to allow coherent air passage including in function of pressure variations in the fluid distribution circuit (8).

2. Machine (1) according to claim 1, **characterized**
**in that** said flow connection means (6) are provided with a seal element (9) configured so as to ensure a substantially leak-free connection with the standard bottleneck zone (3) and presenting in each case at least one air passageway (91) so as to allow the passage of air into the interior of the fluid recipient (2).

3. Machine (1) according to claim 1 or 2, **characterized**
**in that** said seal element (9) is provided with a plurality of air passageways (91) and preferentially presents distancing elements (92), preferentially disposed distributed along its perimeter so that when disposed in said connection support (7) it ensures the passage of air between the outside and the inside of the fluid recipient (2).

4. Machine (1) according to any one of claims 1 to 3,
**characterized**
**in that** the air passageways (91) present a reduced critical dimension relative to the dimension of the bottleneck zone (3), preferentially a diameter of less than 2 mm, preferentially less than 1 mm.

5. Machine (1) according to any one of claims 1 to 4,
**characterized**
**in that** said seal element (9) is provided so as to be in direct contact with a part, preferentially most part of the side surface, in a particularly preferred manner also with a part of the top zone, of the standard bottleneck zone (3) of said fluid recipient.

6. Machine (1) according to any one of claims 1 to 5,
**characterized**
**in that** said seal element (9) presents a cross section of variable thickness at least along said side surface oriented towards the standard bottleneck zone (3) of said fluid recipient (2).

7. Machine (1) according to any one of claims 1 to 6,
**characterized in that** said seal element (9) presents a side surface configured in wave form, dented form or similar form, on the side that is oriented towards the standard bottleneck zone (3).

8. Machine (1) according to claim 1, **characterized**
**in that** said lid element (5) of the fluid reservoir (4) is provided with a seal element (10) that presents at least one air passageway (11) preferentially configured as section of smaller area of cross section, so as to allow coherent air passage with the interior of the fluid reservoir (4).

9. Machine (1) according to any one of claims 1 to 8,
**characterized in that** said seal elements (9, 10) are produced from a synthetic material, preferentially from a semi-rigid rubber, or material of similar density and structure.

10. Machine (1) according to any one of claims 1 to 9,
**characterized in that** said flow connection means (6) are configured in removable manner, preferentially by means of press to fit in a respective support provided in the lid element (5), preferentially on the side thereof oriented towards the inside of the fluid reservoir (4).

11. Machine (1) according to any one of the previous claims,
**characterized in that** the exit of the fluid reservoir (4) and the flow connection means (6) are provided for engagement with a same connection support (7).

12. Machine (1) according to any one of the previous claims,
**characterized in that** it presents a fluid distribution circuit (5) that includes a fluid circulation pump (12) provided so as to generate a hydraulic pressure for actuating the fluid out of the fluid supply means (2, 6), wherein these are provided as seal elements (9, 10) ensuring a coherent, preferentially permanent, air passage into respective interior.

13. Process for the operation of a machine (1) for preparation of beverages according to any one of previous claims 1 to 12, comprising the steps:
- providing a fluid recipient (2) with a standard bottleneck zone (3),
- providing flow connection means (6) including a seal element (9) of annular form,
- applying said flow connection means (6) on said standard bottleneck zone (3), preferentially by means of press to fit,
- disposing the fluid recipient (2) on machine (1), preferentially by means of press to fit of the flow connection means (6) on a connection support (7) of the machine (1),
**characterized in that** the fluid recipient (2) thereby results in liquid flow connection with a fluid circulation circuit (8) and in a coherent air flow connection with the surrounding environment.

14. Process according to claim 13, **characterized in that** it further comprises the steps:
- removing the lid element (5) from a respective engagement by means of the seal element (10) in a fluid reservoir (4),
- removing the flow connection means (6) from a respective engagement in the lid element (5),
- removing the fluid recipient (2) from engagement, preferentially by means of pressure-fit, on said connection support (7).

15. Process according to claims 13 or 14, **characterized in that** it further includes the steps of
- actuation of a cycle of preparation of beverage,
- actuation of a fluid circulation device (12),
wherein the pressure generation by the fluid circulation device (12) is compensated by coherent air passage through the seal elements (9, 10) provided in each case in respective fluid supply means (2, 4).
